# EUROPÄISCHE PATENTSCHRIFT

(11) **EP 3 409 984 B1**
(45) Veröffentlichungstag und Bekanntmachung des Hinweises auf die Patenterteilung: **12.02.2020**
(21) Anmeldenummer: 18174671.0
(22) Anmeldetag: 29.05.2018
(51) Int. Cl.: F16K 31/08, F16K 31/06, F16F 9/34

(54) **KOLBENSCHIEBERVENTIL**
PISTON SLIDE VALVE
DISTRIBUTEUR À TIROIR CYLINDRIQUE

(30) Priorität: 30.05.2017 DE 102017111726
(43) Veröffentlichungstag der Anmeldung: 05.12.2018
(73) Patentinhaber: Rausch & Pausch GmbH, 95100 Selb (DE)
(72) Erfinder: BÄHR, Sebastian, 95100 Selb (DE); DÖHLA, Werner, 95100 Selb (DE)
(74) Vertreter: Klunker IP Patentanwälte PartG mbB

(56) Entgegenhaltungen:
- EP-A1- 3 026 310
- DE-A1- 4 334 350
- DE-A1-102007 057 882
- DE-A1-102011 078 104
- DE-A1-102013 106 214
- US-A- 4 403 765
- US-A- 4 546 955
- US-A- 5 244 063
- US-A- 5 996 369
- US-A1- 2007 040 135

## Beschreibung

Die vorliegende Erfindung betrifft ein Kolbenschieberventil, beispielsweise für einen Stoßdämpfer eines Fahrzeugs.

Ein elektromagnetisch betätigtes Kolbenschieberventil kann als Drosselventil in einem hydraulischen Stoßdämpfer eines Fahrzeugs eingesetzt werden, um eine Dämpfercharakteristik "hart" oder "weich" einzustellen. Mittels des verstellbaren Drosselventils kann je nach Bestromung der Erregerspule des Ventils der Strömungswiderstand des Ventils und dadurch die Dämpfungswirkung des Gesamtsystems verändert werden. Das Ventil verbindet dabei zwei Dämpferkammern, wobei Druckstöße am Dämpfer eine Fluidverdrängung aus einer Dämpferkammer in die andere Dämpferkammer verursachen.

Abhängig von der Anwendung kann es erforderlich sein, dass das Ventil im stromlosen Zustand geschlossen ("normal closed", NC) oder offen ("normal open", NO) ist. Wenn das Ventil im stromlosen Zustand eine vorgegebene Position einnimmt, wird dies auch als Fail-Safe-Zustand bezeichnet, da das Ventil diesen Zustand beim Abschalten oder einem Ausfall des Gesamtsystems, beispielsweise bei einem Ausfall der Stromversorgung, einnimmt. Diese Fail-Safe-Funktion kommt zum Beispiel bei Kraftfahrzeugstoßdämpfern zum Einsatz. Es kann vorteilhaft sein, wenn der Fail-Safe-Zustand einen teilweise geöffneten Zustand des Ventils definiert, so dass bei einem Systemausfall der Dämpfer nicht in eine ganz weiche oder harte Kennung wechselt, um damit einen gemäßigten und sicheren Fahrzustand sicherzustellen.

Aus der DE 10 2008 035 899 A1 und der DE 10 2013 106 214 A1 sind elektromagnetisch betätigte NO-Ventile bekannt. Diese Ventile weise eine Fail-Safe-Stellung auf, in der das Ventil teilweise geöffnet ist, d.h. eine Stellung im nicht bestromten Zustand zwischen der maximal geöffneten und geschlossenen Stellung. Wird die Spule des Ventils elektrisch bestromt, bewegt sich der Kolben (auch als Schieber bezeichnet) des Ventils zunächst in die maximal geöffnete Stellung und kann dort mit einer Grundbestromung gehalten werden, d.h. einer Minimalbestromung, die nötig ist, um das Ventil maximal offen zu halten. Bei weiterer Erhöhung des Stroms bewegt sich der Schieber kontinuierlich in Richtung der geschlossenen Stellung.

Diese Ventile weisen zwei Magnetanker und zwei entsprechende Vorspannfedern auf. Um das Ventil in der maximal geöffneten Stellung zu halten, ist eine Mindestmagnetkraft und bei einer "Grundbestromung" notwendig, um die Kraft der Fail-Safe-Feder, d.h. derjenigen Feder, die den Kolben in Richtung der Fail-Safe-Stellung drängt, zu überwinden. Bei einem Absenken der Bestromung unter die Grundbestromung schaltet das Ventil in den Fail-Safe-Zustand. Ein Absenken der Grundbestromung ist somit nicht möglich. Auch äußere Einflüsse, wie beispielsweise Vibrationen aufgrund von Fahrbahnunebenheiten, können ebenfalls dazu führen, dass das Ventil bei Grundbestromung ungewollt von der maximal geöffneten Stellung in die Fail-Safe-Stellung wechselt. Darüber hinaus kann die Fail-Safe-Feder nicht beliebig steif und damit der Fail-Safe-Hub nicht beliebig groß gestaltet werden, da das Ventil sonst zu leicht in den Fail-Safe-Zustand wechseln würde. Anders ausgedrückt erfordert eine steife Fail-Safe-Feder eine hohe Grundbestromung zum Überwinden der Vorspannkraft der Fail-Safe-Feder und zum Halten der maximal geöffneten Stellung des Ventils.

Aufgabe der Erfindung ist es daher, ein elektromagnetisch betätigtes Kolbenschieberventil bereitzustellen, das eine Fail-Safe-Funktion bei geringer elektrischer Grundbestromung, großem Fail-Safe-Hub des Ventils und Stabilität gegenüber äußeren Störeinflüssen aufweist.

Die Aufgabe wird gelöst durch ein elektromagnetisch betätigtes Kolbenschieberventil mit den Merkmalen des unabhängigen Anspruchs 1. Bevorzugte Ausgestaltungen und Weiterbildungen sind in den abhängigen Ansprüchen angegeben.

Ein Kolbenschieberventil gemäß der Erfindung umfasst eine Kolbenschieberanordnung mit einem Kolben, der zum Regeln einer freien Querschnittsfläche eines Fluiddurchgangs zwischen einem ersten Fluidanschluss und einem zweiten Fluidanschluss des Ventils in einem Ventilgehäuse axial verschieblich ist. Die Kolbenschieberanordnung umfasst des Weiteren einen ersten, mit dem Kolben verbundenen Magnetanker und einen zweiten, bezüglich des Kolbens axial verlagerbaren Magnetanker, sowie eine erste Vorspanneinrichtung und eine zweite Vorspanneinrichtung. Bei der ersten und zweiten Vorspanneinrichtung kann es sich insbesondere jeweils um eine Vorspannfeder handeln. Der erste Magnetanker ist mit dem Kolben verbunden, d.h. er bewegt sich axial zusammen mit dem Kolben. Insbesondere kann die Verbindung als "fest" oder "ortsfest" bezeichnet werden, wobei der erste Magnetanker und der Kolben nicht notwendigerweise untrennbar verbunden sein müssen.

Durch Erzeugen eines elektromagnetischen Felds durch Bestromen einer Spule ist der Kolben entgegen der Kraft der ersten Vorspanneinrichtung axial verlagerbar. Gleichzeitig stützt sich die zweite Vorspanneinrichtung gegen den ersten Magnetanker und den zweiten Magnetanker ab, so dass der Kolben im nicht bestromten Zustand der Spule durch axiales Verlagern aufgrund der Kraft der zweiten Vorspanneinrichtung entgegen der Kraft der ersten Vorspanneinrichtung eine vorgegebene Position einnimmt. Die vorgegebene Position definiert die eingangs erläuterte Fail-Safe-Stellung des Ventils und wird insbesondere beim Übergang vom bestromten Zustand zum unbestromten Zustand des Ventils eingenommen, d.h. insbesondere beim Abschalten des Ventils oder bei einem Systemausfall. Vorteilhaft kann das erfindungsgemäße Kolbenschieberventil in einem Stoßdämpfer für ein Kraftfahrzeug eingesetzt werden.

Erfindungsgemäß umfasst das Kolbenschieberventil des Weiteren einen Permanentmagneten, der derart auf zumindest einen des ersten Magnettankers und des zweiten Magnetankers wirkt, dass eine durch den Permanentmagneten verursachte Magnetkraft der Kraft der zweiten Vorspanneinrichtung entgegenwirkt. Die Magnetkraft wirkt insbesondere in einem bestromten Zustand des Ventils, in dem die Stromstärke größer oder gleich einer Grundbestromung ist. Falls in der folgenden Beschreibung der Begriff "Magnet" verwendet wird, ist der Permanentmagnet gemeint. Falls der Elektromagnet, das heißt insbesondere die Spule, des Ventils gemeint sein soll, wird dies eindeutig klargestellt. Die Grundbestromung definiert die Mindeststromstärke, die zum Überwinden der Kraft der zweiten Vorspanneinrichtung und beispielsweise zum Halten einer maximal geöffneten Stellung des Ventils notwendig ist.

Durch Vorsehen eines Permanentmagneten, der der Kraft der zweiten Vorspanneinrichtung entgegenwirkt, können die eingangs beschriebenen Nachteile überwunden werden. Insbesondere ermöglicht der Permanentmagnet eine niedrigere elektrische Grundbestromung des Ventils, da er die durch die Grundbestromung des Ventils erreichte Stellung, z.B. die maximal geöffnete Stellung, unterstützt, d.h. dazu beiträgt, diese Stellung zu halten, ohne dass das Ventil ungewollt zurück in die Fail-Safe-Stellung wechselt. Dadurch kann ein erheblich reduzierter Energieverbrauch erreicht werden, da in einem Fahrzeug mehrere Ventile, beispielsweise bis zu acht Ventile, verbaut sein können. Zudem wird eine härtere Fail-Safe-Abstimmung möglich, d.h. ein größerer Fail-Safe-Hub des Schiebers bzw. Kolbens. Das erfindungsgemäße Kolbenschieberventil weist eine erhöhte Robustheit in der durch die Grundbestromung erreichten Stellung des Ventils gegen Störeinflüsse, z.B. mechanische Anregung des Ventils von außen oder Strömungskräfte, auf. Insgesamt kann dadurch eine Vergrößerung des Regelbereichs des Ventils mit besserer Auflösung erreicht werden.

Vorzugsweise ist der Permanentmagnet derart angeordnet, dass die durch den Permanentmagneten verursachte Magnetkraft den ersten Magnetanker und den zweiten Magnetanker aufeinander zu bewegt. Insbesondere kann der Permanentmagnet derart angeordnet sein, dass er eine Anziehungskraft zwischen dem ersten Magnetanker und dem zweiten Magnetanker ausübt. Insbesondere kann dies der Fall sein, wenn die zweite Vorspanneinrichtung derart angeordnet ist, dass sie den ersten Magnetanker und den zweiten Magnetanker auseinander drückt. Die Magnetkraft des Permanentmagneten unterstützt die Haltekraft zwischen dem ersten und zweiten Magnetanker.

Wie bereits kurz angedeutet, bezieht sich die beschriebene Wirkung der Magnetkraft generell insbesondere auf einen Zustand des Ventils, in welchem mindestens die Grundbestromung anliegt. Mit anderen Worten wird die Magnetkraft für einen Zustand des Ventils beschrieben, in welchem der erste Magnetanker und der zweite Magnetanker ausreichend nahe zueinander angeordnet sind, insbesondere direkt aneinander angrenzen und sich gegebenenfalls berühren. Diese Stellung des Ventils wird insbesondere durch Anlegen der Grundbestromung erreicht, welche die Kraft der zweiten Vorspanneinrichtung, das heißt insbesondere der Fail-Safe-Feder, welche sich gegen den ersten und zweiten Magnetanker abstützt, überwindet. Dagegen sind der erste Magnetanker und der zweite Magnetanker im nicht bestromten Zustand des Ventils möglicherweise zu weit voneinander entfernt, so dass der Permanentmagnet keine relevante Kraft zwischen dem ersten Magnetanker und dem zweiten Magnetanker, das heißt insbesondere keine oder nur eine sehr geringe Kraft, die der Kraft der zweiten Vorspanneinrichtung entgegenwirkt, entfalten kann.

Der Permanentmagnet kann insbesondere zwischen dem ersten Magnetanker und dem zweiten Magnetanker angeordnet sein. Vorteilhaft ist der Permanentmagnet in zumindest einem des ersten Magnetankers und des zweiten Magnetankers, angeordnet. Beispielsweise kann der Magnet im ersten Magnetanker angeordnet sein. Es versteht sich, dass der Magnet alternativ auch im zweiten Magnetanker angeordnet sein kann. Denkbar ist auch, dass sowohl im ersten als auch im zweiten Magnetanker zumindest ein Permanentmagnet vorgesehen ist. Diese können beispielsweise in radialer Richtung versetzt zueinander angeordnet sein, oder axial zueinander ausgerichtet unter Berücksichtigung der Richtung der Magnetisierung, so dass durch die Permanentmagneten eine Kraft erreicht wird, die der Kraft der zweiten Vorspanneinrichtung entgegenwirkt.

Der Permanentmagnet kann in dem entsprechenden Magnetanker beispielsweise eingesetzt oder eingebettet sein, beispielsweise als separates Bauteil montiert oder im Spritzgussverfahren mit eingespritzt. Durch die Anordnung des Magneten in dem Magnetanker bleibt die Baugröße des Ventils unverändert und es ist kein zusätzlicher Bauraum notwendig. Ein weiterer Vorteil der Positionierung des Magneten im Magnetanker besteht darin, dass bei Anordnung im Magnetanker - und damit auf kleinem Durchmesser - bereits relativ wenig Dauermagnetvolumen ausreicht, um die Haltekraft signifikant anzuheben.

Durch die Anordnung des Magneten in einem der Magnetanker (oder gegebenenfalls in beiden Magentankern) schließt sich um den Magneten ein Eisenkreis über beide Anker. Somit ist gewährleistet, dass der Magnet nur zu einer Erhöhung der Anziehungskraft zwischen den Ankern beiträgt. Eine Positionierung an anderer Stelle im Eisenkreis (z.B. in einer Übertrittscheibe) hätte einen magnetgetriebenen Fluss zur Folge, der neben dem Spalt zwischen beiden Magnetankern auch den Arbeitsluftspalt zwischen dem ersten Magnetanker und einem ortsfesten Polteil passiert. Damit würde neben der Haltekraft zwischen den Magnetankern auch die Magnetkraft im Regelbetrieb steigen. Die Kraft der ersten Vorspannfeder müsste entsprechend erhöht werden. Um den Fail-Safe-Hub dabei nicht zu reduzieren, müsste im gleichen Zug auch die Fail-Safe-Federkraft steigen. Der Zugewinn an Haltekraft wäre damit kompensiert.

Vorteilhaft ist der Permanentmagnet in zumindest einem des ersten Magnetankers und des zweiten Magnetankers nahe einer Oberfläche, die dem entsprechend anderen des ersten und zweiten Magnetankers zugewandt ist, angeordnet. Wie erwähnt kann der Magnet in den entsprechenden Magnetanker eingesetzt sein, beispielsweise in eine Ausnehmung in der Oberfläche des Magnetankers eingesetzt sein. Theoretisch denkbar wäre, dass der Permanentmagnet nahe der Oberfläche in den entsprechenden Magnetanker eingebettet ist, so dass der Magnet vollständig von dem Material des Magnetankers umschlossen ist. Jedoch behindert die vollständige Einbettung des Permanentmagneten die Ausprägung des Magnetflusses an der Kontaktfläche der beiden Magnetanker. Daher liegt der Permanentmagnet vorzugsweise zumindest teilweise frei.

Vorteilhaft ist der Permanentmagnet im Wesentlichen in axialer Richtung magnetisiert, so dass er einer axialen Kraft der zweiten Vorspanneinrichtung optimal entgegenwirken kann. Mit anderen Worten ist der Permanentmagnet vorzugsweise in einer Richtung parallel zur Kraft der zweiten Vorspanneinrichtung magnetisiert. Vorzugsweise ist die durch den Permanentmagneten verursachte Magnetkraft schwächer als die Kraft der zweiten Vorspanneinrichtung, damit die Kraft der zweiten Vorspanneinrichtung im nicht bestromten Zustand des Ventils die Magnetkraft überwiegt und der Kolben die vorgegebene Position, das heißt das Ventil die Fail-Safe-Stellung, einnehmen kann. Die Magnetkraft des Permanentmagneten ist jedoch ausreichend groß, um wie erläutert die Stellung des Ventils bei Grundbestromung zu unterstützen.

Der Permanentmagnet kann als Ringmagnet ausgebildet sein oder zumindest einen Ringmagnet umfassen. Es versteht sich, dass auch andere Formen des Magneten denkbar sind, z.B. Ringmagnetsegmente, oder andere nicht ringförmige Elemente. Der Permanentmagnet kann einteilig ausgebildet sein oder mehrere Teile umfassen. Beispielsweise können mehrere einzelne Magnete um die Längsachse des Magnetankers herum angeordnet sein, insbesondere regelmäßig angeordnet. Die einzelnen Magnete können dabei beliebige geeignete Formen aufweisen.

Zur weiteren Optimieren der Haltekraft zwischen dem ersten Magentanker und dem zweiten Magnetanker bei Grundbestromung des Ventils kann eine Stufe oder Ausnehmung an einer Stirnseite des ersten oder zweiten Magnetankers vorgesehen sein, welche bei Grundbestromung des Ventils an eine entsprechende Stirnseite des entsprechend anderen des ersten und zweiten Magnetankers angrenzt. Dadurch wird die Kontaktfläche zwischen den beiden Magnetankern reduziert und der magnetische Fluss konzentriert sich auf die relativ kleine Kontaktfläche, was eine erhöhte magnetische Flussdichte und damit eine erhöhte Haltekraft zwischen den beiden Magnetankern zur Folge hat.

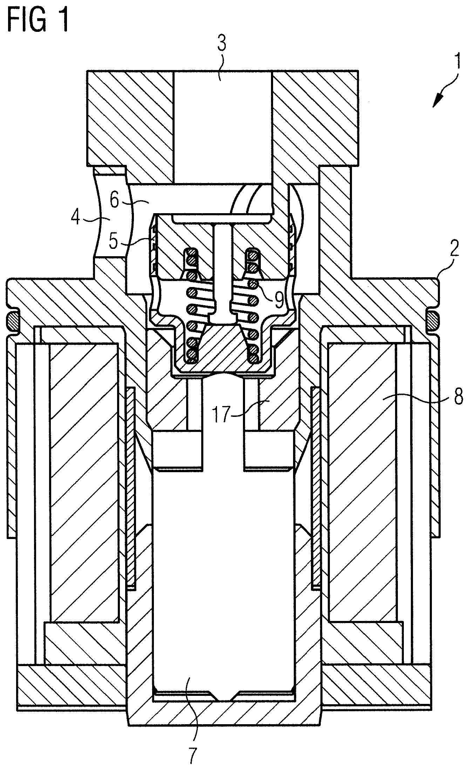

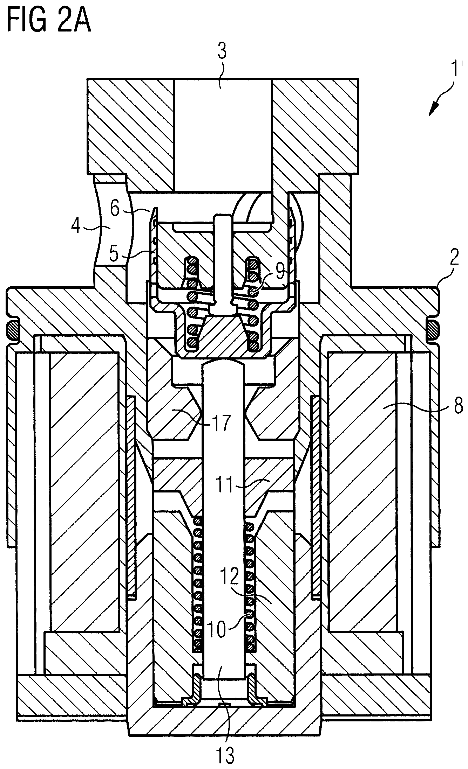

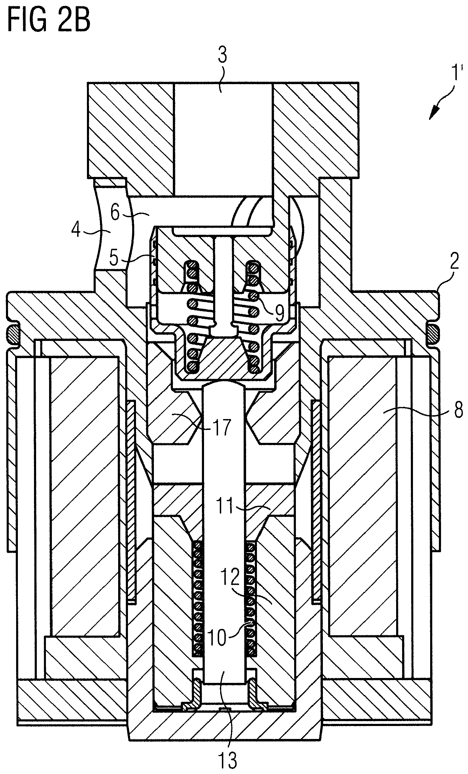

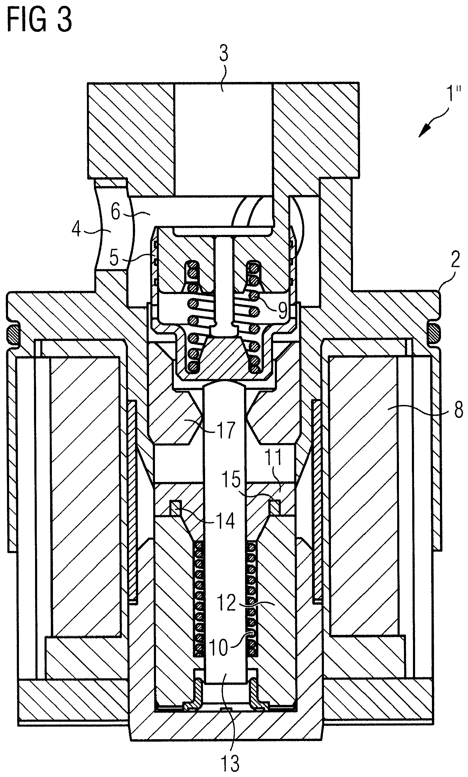

Die Erfindung wird im Folgenden mit Bezug auf die anliegenden Zeichnungen beschrieben. Die Zeichnungen sind lediglich schematische Darstellungen und die Erfindung ist nicht auf die speziellen dargestellten Ausführungsbeispiele beschränkt. Das erfindungsgemäße Ventil ist insbesondere in Fig. 3 dargestellt. Fig. 1 und 2 zeigen bekannte Ventile, welche nicht alle Merkmale der Erfindung enthalten, jedoch zur Erläuterung des erfindungsgemäßen Ventils beschrieben werden.
Fig. 1 zeigt eine Schnittdarstellung eines NO-Kolbenschieberventils im unbestromten Zustand.
Fig. 2A zeigt eine Schnittdarstellung eines NO-Kolbenschieberventils mit einer Fail-Safe-Funktion im unbestromten Zustand.
Fig. 2B zeigt eine Schnittdarstellung des Kolbenschieberventils aus Fig. 2A im geöffneten Zustand bei einer Grundbestromung.
Fig. 3 zeigt eine Schnittdarstellung eines erfindungsgemäßen Kolbenschieberventils im geöffneten Zustand bei einer Grundbestromung.
Fig. 4 zeigt eine Schnittdarstellung eines Details des Kolbenschieberventils aus Fig. 3.
Fig. 5 zeigt das Detail des Kolbenschieberventils entsprechend Fig. 4, einschließlich Magnetfeldlinien.

In Fig. 1 ist ein bekanntes Kolbenschieberventil 1 im Schnitt dargestellt, um die prinzipielle Funktionsweise kurz zu erläutern. In dem in Fig. 1 dargestellten unbestromten Zustand ist das Ventil 1 geöffnet, d.h. es handelt sich um ein Kolbenschieberventil 1 in NO-Bauweise ("normal offen"). Das Ventil 1 weist ein Ventilgehäuse 2 mit einem ersten Fluidanschluss 3, welcher je nach Anwendung ein Fluideingang sein kann, und einem zweiten Fluidanschluss 4, welcher je nach Anwendung ein Fluidausgang sein kann, auf. In diesem Ausführungsbeispiel ist der Fluideingang 3 axial angeordnet und der Fluidausgang 4 umfasst mehrere radiale Öffnungen. Ein Kolben 5, welcher auch als Schieber oder Kolbenschieber bezeichnet werden kann und insbesondere hohl ausgebildet sein kann, ist axial verschieblich in dem Ventilgehäuse 2 angeordnet, um einen Fluiddurchgang 6 zwischen dem ersten Fluidanschluss 3 und zweiten Fluidanschluss 4 zu öffnen und zu schließen, genauer gesagt einen freien Querschnitt des Fluiddurchgangs 6 zu regeln. Ein solcher Schieber ist beispielsweise aus EP 1 538 366 A1 bekannt. Es versteht sich, dass die vorliegende Erfindung nicht auf einen derartigen Schieberaufbau beschränkt ist, sondern dass auch andere Schieber- oder Kolbenkonstruktionen zur Regelung eines freien Querschnitts eines Fluiddurchgangs verwendet werden können.

Der Kolben 5 ist mit einem Magnetanker 7 verbunden, so dass sich der Kolben 5 und der Magnetanker 7 gemeinsam bewegen. Der Magnetanker 7 - und damit der Kolben 5 - ist mittels des durch eine Spule 8 erzeugten Magnetfelds axial verlagerbar. Bei Bestromung der Spule 8 wirkt eine Magnetkraft in einem geschlossenen Magnetkreis, und der Kolben 5 wird dabei gegen die Kraft einer Vorspannfeder 9 in Richtung eines stationären Polteils 17 bewegt. Die Vorspannfeder 9, welche auch als Regelfeder bezeichnet werden kann, stützt sich am Ventilgehäuse 2 und dem Kolben 5 ab und drängt den Kolben 5 in dem hier gezeigten Ausführungsbeispiel in eine Stellung, in welcher der Fluiddurchgang 6 maximal geöffnet ist. Mit anderen Worten, im nicht bestromten Zustand der Spule 8 des Ventils 1 ist der Fluiddurchgang 6 maximal geöffnet, das heißt das Ventil 1 ist normal offen (NO). Alternativ (nicht dargestellt) könnte der Kolben 5 mittels der Vorspannfeder 9 auch in eine Stellung gedrängt werden, in der der Fluiddurchgang 6 geschlossen ist (normal geschlossen, NC).

Fig. 2A und 2B zeigen ein Kolbenschieberventil 1', welches prinzipiell ähnlich zu dem in Fig. 1 gezeigten Kolbenschieberventil 1 aufgebaut ist, und daher für korrespondierende Teile die gleichen Bezugszeichen verwendet werden. Jedoch weist das in Fig. 2A und 2B gezeigte Kolbenschieberventil 1' eine sogenannte Fail-Safe-Funktion auf. In diesem Ausführungsbeispiel nimmt das Ventil 1 dabei in einem nicht bestromten Zustand eine Stellung ein, in der der Fluiddurchgang 6 weder maximal geöffnet noch komplett verschlossen, sondern teilweise geöffnet ist. Bei einem Einsatz in einem Stoßdämpfer eines Kraftfahrzeugs wird dadurch eine Dämpfercharakteristik erreicht, die weder ganz hart noch ganz weich ist, so dass das Fahrzeug beispielsweise bei einem Ausfall des Systems eine gemäßigte Dämpfercharakteristik aufweist.

Die Fail-Safe-Funktion wird durch eine Zweiteilung des Magnettankers und durch Vorsehen einer zweiten Vorspannfeder neben der Regelfeder 9 erreicht. Die zweite Vorspannfeder 10 ist zwischen dem ersten Magnetanker 11, welcher als Regelanker bezeichnet werden kann, und dem zweiten Magnetanker 12, welche als Fail-Safe-Anker bezeichnet werden kann, angeordnet und drückt die beiden Magnetanker 11, 12 auseinander. Der erste Magnetanker 11 ist fest mit einer Kolbenstange 13 des Kolbens 5 verbunden, wohingegen der zweite Magnetanker 12 auf der Kolbenstange 13 axial verlagerbar ist. Im nicht bestromten Zustand des Ventils 1', welcher in Fig. 2A dargestellt ist, wirkt die Kraft der zweiten Vorspannfeder 10 der Kraft der ersten Vorspannfeder 9 entgegen bis ein Kräftegleichgewicht erreicht ist und das Ventil 1' damit die in Fig. 2A gezeigte teilweise geöffnete Stellung einnimmt.

Erfolgt nun eine Bestromung der Spule 8 des Ventils 1', wird ab Erreichen einer Grundbestromung die Kraft der zweiten Vorspannfeder 10 durch eine elektromagnetische Anziehungskraft zwischen den beiden Magnetankern 11, 12 überwunden, so dass die beiden Magnetanker 11, 12 stirnseitig aneinander anliegen. Bei Grundbestromung ist der Fluiddurchgang 6 maximal geöffnet, wie in Fig. 2B dargestellt. Bei weiterer Erhöhung der Stromstärke bewegen sich der erste Magnetanker 11 und zweite Magnetanker 12 als eine Einheit gegen die Kraft der ersten Vorspannfeder 9 und das Ventil 1' wird geschlossen (nicht dargestellt).

Wird das System abgeschaltet oder fällt das System aus, das heißt beim Abschalten oder Ausfall der Bestromung, drückt die zweite Vorspannfeder 10 den ersten und zweiten Magnetanker 11, 12 entgegen der Kraft der ersten Vorspannfeder 9 wieder auseinander, so dass das Ventil die in Fig. 2A gezeigte Stellung, d.h. die Fail-Safe-Stellung, einnimmt. Jedoch soll das Ventil 1' nicht ungewollt in die Fail-Safe-Stellung fallen, zum Beispiel aufgrund von Vibrationen bei Fahrbahnunebenheiten. Daher ist eine ausreichende Grundbestromung erforderlich, um die in Fig. 2B gezeigte Stellung zu halten. Das heißt es muss ausreichend elektromagnetische Kraft erzeugt werden, um die Kraft der zweiten Vorspannfeder 10 zu überwinden und um ausreichend Kraftüberschuss, d.h. Haltekraft zwischen dem ersten und zweiten Magnetanker 11, 12 zu erzielen.

In Fig. 3 ist ein erfindungsgemäßes Kolbenschieberventil 1" dargestellt. Die in Fig. 3 dargestellte Stellung des Ventils 1" entspricht der in Fig. 2B dargestellten Stellung des Ventils 1'. Insofern wird auf die Beschreibung zu Fig. 2B verwiesen und für korrespondierende Teile werden die gleichen Bezugsziffern verwendet. Im Unterschied zu dem in Fig. 2A und 2B dargestellten Kolbenschieberventil 1', weist das in Fig. 3 dargestellte erfindungsgemäße Ventil 1" einen Permanentmagneten 14 auf, der dazu beiträgt, die in Fig. 3 dargestellte maximal geöffnete Stellung des Ventils 1" zu halten. Der Permanentmagnet 14 ist dazu zwischen dem ersten Magnetanker 11 und dem zweiten Magnetanker 12 angeordnet, um eine Anziehungskraft zwischen dem ersten und zweiten Magnetanker 11, 12 zu erzeugen, die der Kraft der zweiten Vorspannfeder 10 entgegenwirkt.

Insbesondere in dem in Fig. 3 dargestellten Zustand des Ventils 1", das heißt bei einer Grundbestromung, in dem der erste und zweite Magnetanker 11, 12 aneinander anliegen, wird die durch den Permanentmagneten 14 erzeugte magnetische Anziehungskraft zwischen dem ersten und zweiten Magnetanker 11, 12 erreicht. Dagegen wird im nicht bestromten Zustand des Ventils 1" (vergleiche Fig. 2A), in welchem die beiden Magnetanker 11, 12 voneinander beabstandet sind und durch die zweite Vorspannfeder 10 auseinander gedrückt werden, durch den Permanentmagneten 14 keine oder nur eine sehr geringe Anziehungskraft zwischen dem ersten und zweiten Magnetanker 11, 12 erreicht, da die Anziehungskraft bei steigendem Abstand der Magnetanker 11, 12 stark abfällt. Die Kennlinie der zweiten Vorspannfeder 10 ist dagegen im Wesentlichen linear zum Abstand der beiden Magnetanker 11, 12.

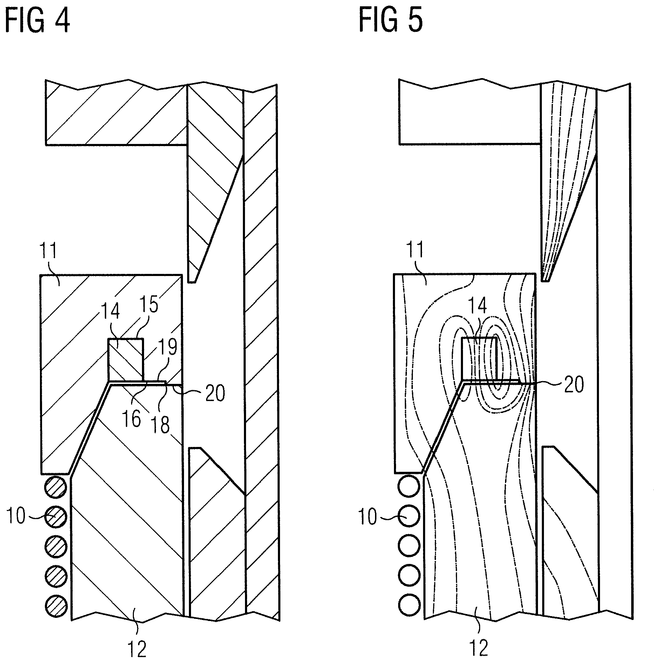

Wie in Fig. 3 dargestellt, ist der Permanentmagnet 14 in dem ersten Magnetanker 11 angeordnet. Beispielsweise kann der Permanentmagnet 14 als Ringmagnet ausgebildet sein, der in einer entsprechend ringförmigen Ausnehmung 15 an einer Stirnseite 16 des ersten Magnetankers 11 eingesetzt ist (siehe auch Fig. 4). Wie oben erläutert, kann der Permanentmagnet 14 jedoch beliebige andere Formen aufweisen und in den Magnetanker 11 eingesetzt oder eingebettet sein. Die Anordnung des Permanentmagneten innerhalb des Magnetankers 11 hat mehrere Vorteile. Zum einen schließt sich ein Eisenkreis über beide Magnetanker 11, 12, so dass der Magnet 14 nur die Anziehungskraft zwischen den beiden Magnetankern 11, 12 erhöht, jedoch nicht in den elektromagnetischen Kreis eingreift und beispielsweise auch die Anziehungskraft zum Polteil 17 erhöht. Dies würde nachteilig eine stärkere Regelfeder 9 und damit eine höhere Grundbestromung zum Erreichen der maximal geöffneten Stellung des Ventils erfordern.

Die durch den Permanentmagneten 14 erzeugte Anziehungskraft zwischen dem ersten und zweiten Magnetanker 11, 12 wirkt der Kraft der zweiten Vorspannfeder 10 entgegen und erhöht die durch die Grundbestromung erzeugte Haltekraft zwischen dem ersten Magnetanker 11 und dem zweiten Magnetanker 12. Die zum Halten der maximal geöffneten Stellung des Ventils 1" notwendige Grundbestromung kann daher im Vergleich zu einem Ventil ohne den Permanentmagneten 14 (beispielsweise das in Fig. 2A und 2B gezeigte Ventil 1') reduziert werden.

In dem in Fig. 4 gezeigten Detail des Ventils 1" aus Fig. 3 ist eine weitere Maßnahme erkennbar, welche die Haltekraft zwischen dem ersten Magnetanker 11 und dem zweiten Magnetanker 12 verbessern kann. Der erste Magnetanker 11 weist an seiner Stirnseite 16, welche in Richtung des zweiten Magnetankers 12 weist, eine flache Stufe 18 auf. Anders ausgedrückt, weist die Stirnseite 16 des ersten Magnetankers einen leicht zurückversetzten Bereich 19 auf, welcher insbesondere ein radial innerer Bereich sein kann. Dadurch besteht nur an einem äußeren Rand ein direkter Kontakt zwischen dem ersten Magnetanker 11 und den zweiten Magnetanker 12. Auf diese Weise konzentriert sich der magnetische Fluss auf eine kleine Kontaktfläche 20, so dass sich dort die magnetische Flussdichte erhöht, was wiederum eine erhöhte Haltekraft zwischen den beiden Magnetankern 11, 12 erzeugt. Es versteht sich, dass auch andere Gestaltungen der Stirnseite des ersten Magnetankers 11 und des zweiten Magnetankers 12 denkbar sind, um die Kontaktfläche 20 zu reduzieren, um die Haltekraft zu erhöhen. Diese Maßnahme kann zusätzlich zum Anordnen eines Permanentmagneten vorgesehen werden.

Fig. 5 zeigt näherungsweise den Verlauf der Magnetfeldlinien um den Permanentmagneten 14 zwischen den beiden Magnetankern 11, 12 bei bestromter Spule. Insbesondere ist zu erkennen, dass der Permanentmagnet 14 in axialer Richtung magnetisiert ist, um die Haltekraft zwischen dem ersten und zweiten Magnetanker 11, 12 zu verbessern und optimal der Kraft der zweiten Vorspannfeder 10 entgegenzuwirken. Die größte magnetische Flussdichte zwischen den beiden Magnetankern zeigt sich an der Kontaktfläche der beiden Magnetanker (vgl. Fig. 4).

## Patentansprüche

1. Elektromagnetisch betätigtes Kolbenschieberventil (1"), umfassend:
- ein Ventilgehäuse (2) mit einem ersten Fluidanschluss (3) und einem zweiten Fluidanschluss (4) und zumindest einem die beiden Fluidanschlüsse (3, 4) verbindenden Fluiddurchgang (6), und
- eine Kolbenschieberanordnung mit einem Kolben (5), der zum Regeln einer freien Querschnittsfläche des Fluiddurchgangs (6) in dem Ventilgehäuse (2) axial verschieblich ist, einem ersten, mit dem Kolben (5) verbundenen Magnetanker (11) und einem zweiten, bezüglich des Kolbens (5) axial verlagerbaren Magnetanker (12), sowie einer ersten Vorspanneinrichtung (9) und einer zweiten Vorspanneinrichtung (10),
wobei der Kolben (5) durch Erzeugen eines elektromagnetischen Felds durch Bestromen einer Spule (8) entgegen der Kraft der ersten Vorspanneinrichtung (9) axial verlagerbar ist, und wobei sich die zweite Vorspanneinrichtung (10) gegen den ersten Magnetanker (11) und den zweiten Magnetanker (12) abstützt, so dass der Kolben (5) im nicht bestromten Zustand der Spule (8) durch axiales Verlagern aufgrund der Kraft der zweiten Vorspanneinrichtung (10) entgegen der Kraft der ersten Vorspanneinrichtung (9) eine vorgegebene Position einnimmt,
**dadurch gekennzeichnet, dass** das Kolbenschieberventil (1") des Weiteren einen Permanentmagneten (14) umfasst, der derart auf zumindest einen des ersten Magnettankers (11) und des zweiten Magnetankers (12) wirkt, dass eine durch den Permanentmagneten (14) verursachte Magnetkraft der Kraft der zweiten Vorspanneinrichtung (10) entgegenwirkt.

2. Kolbenschieberventil nach Anspruch 1, wobei der Permanentmagnet (14) derart angeordnet ist, dass die durch den Permanentmagneten (14) verursachte Magnetkraft den ersten Magnetanker (11) und den zweiten Magnetanker (12) aufeinander zu bewegt.

3. Kolbenschieberventil nach Anspruch 1 oder 2, wobei der Permanentmagnet (14) derart angeordnet ist, dass er eine Anziehungskraft zwischen dem ersten Magnetanker (11) und dem zweiten Magnetanker (12) ausübt.

4. Kolbenschieberventil nach einem der Ansprüche 1 bis 3, wobei der Permanentmagnet (14) zwischen dem ersten Magnetanker (11) und dem zweiten Magnetanker (12) angeordnet ist.

5. Kolbenschieberventil nach einem der Ansprüche 1 bis 4, wobei der Permanentmagnet (14) in zumindest einem des ersten Magnetankers (11) und des zweiten Magnetankers (12), vorzugsweise im ersten Magnetanker (11), angeordnet, insbesondere eingebettet oder eingesetzt, ist.

6. Kolbenschieberventil nach Anspruch 5, wobei der Permanentmagnet (14) in zumindest einem des ersten Magnetankers (11) und des zweiten Magnetankers (12) nahe einer Oberfläche, die dem entsprechend anderen des ersten und zweiten Magnetankers (11, 12) zugewandt ist, angeordnet ist.

7. Kolbenschieberventil nach einem der Ansprüche 1 bis 6, wobei der Permanentmagnet (14) in axialer Richtung magnetisiert ist.

8. Kolbenschieberventil nach einem der Ansprüche 1 bis 7, wobei die durch den Permanentmagneten (14) verursachte Magnetkraft schwächer als die Kraft der zweiten Vorspanneinrichtung ist (10).

9. Kolbenschieberventil nach einem der Ansprüche 1 bis 8, wobei der Permanentmagnet (14) ein Ringmagnet ist.

10. Stoßdämpfer für ein Fahrzeug, umfassend ein Kolbenschieberventil (1") nach einem der Ansprüche 1 bis 9.

## Claims

1. An electromagnetically actuated piston slide valve (1"), comprising:
- a valve housing (2) with a first fluid connector (3) and a second fluid connector (4) and at least one fluid passage (6) connecting the two fluid connectors (3, 4), and
- a piston slide arrangement with a piston (5) which is axially displaceable in the valve housing (2) for regulating a free cross section of the fluid passage (6), a first magnetic armature (11) connected to the piston (5) and a second magnetic armature (12) which is axially displaceable with respect to the piston (5), as well as a first biasing device (9) and a second biasing device (10),
wherein the piston (5) is axially displaceable against the force of the first biasing device (9) by generating an electromagnetic field through energizing a coil (8), and wherein the second biasing device (10) rests against the first magnetic armature (11) and the second magnetic armature (12), so that, in the unenergized state of the coil (8), the piston (5) takes a predetermined position by axial displacement due to the force of the second biasing device (10) against the force of the first biasing device (9),
**characterized in that** the piston slide valve (1") further comprises a permanent magnet (14) which acts in such a manner on at least one of the first magnetic armature (11) and the second magnetic armature (12) that a magnetic force caused by the permanent magnet (14) counteracts the force of the second biasing device (10).

2. The piston slide valve according to claim 1, wherein the permanent magnet (14) is arranged such that the magnetic force caused by the permanent magnet (14) moves the first magnetic armature (11) and the second magnetic armature (12) towards each other.

3. The piston slide valve according to claim 1 or 2, wherein the permanent magnet (14) is arranged such that it exerts an attractive force between the first magnetic armature (11) and the second magnetic armature (12).

4. The piston slide valve according to any of claims 1 to 3, wherein the permanent magnet (14) is arranged between the first magnetic armature (11) and the second magnetic armature (12).

5. The piston slide valve according to any of claims 1 to 4, wherein the permanent magnet (14) is arranged, in particular embedded or inserted, in at least one of the first magnetic armature (11) and the second magnetic armature (12), preferably in the first magnetic armature (11).

6. The piston slide valve according to claim 5, wherein the permanent magnet (14) is arranged in at least one of the first magnetic armature (11) and the second magnetic armature (12) near a surface which faces the correspondingly other one of the first and the second magnetic armature (11, 12).

7. The piston slide valve according to any of claims 1 to 6, wherein the permanent magnet (14) is magnetized in the axial direction.

8. The piston slide valve according to any of claims 1 to 7, wherein the magnetic force caused by the permanent magnet (14) is weaker than the force of the second biasing device (10).

9. A piston slide valve according to any of claims 1 to 8, wherein the permanent magnet (14) is a ring magnet.

10. A shock absorber for a vehicle, comprising a piston slide valve (1") according to any of claims 1 to 9.

## Revendications

1. Vanne à tiroir-piston (1") actionnée électromagnétiquement, comprenant :
- un boîtier de vanne (2) ayant un premier raccordement de fluide (3) et un deuxième raccordement de fluide (4) et au moins un passage de fluide (6) reliant les deux raccordements de fluide (3, 4), et
- un agencement de tiroirs-pistons comportant un piston (5) qui, pour le réglage d'une surface libre de section transversale du passage de fluide (6), peut coulisser axialement dans le boîtier de vanne (2), une première armature d'aimant (11), reliée au piston (5), et une deuxième armature d'aimant (12), déplaçable axialement par rapport au piston (5), ainsi qu'un premier dispositif de précontrainte (9) et un deuxième dispositif de précontrainte (10),
cependant que le piston (5) est, par génération d'un champ électromagnétique par alimentation de la bobine (8) en courant, déplaçable axialement contre la force du premier dispositif de précontrainte (9), et cependant que le deuxième dispositif de précontrainte (10) s'appuie contre la première armature d'aimant (11) et la deuxième armature d'aimant (12), de telle sorte que le piston (5), à l'état de la bobine (8) non alimenté en courant, par déplacement axial en raison de la force du deuxième dispositif de précontrainte (10) contre la force du premier dispositif de précontrainte (9), adopte une position prédéterminée,
**caractérisée en ce que** la vanne à tiroir-piston (1") comprend en outre un aimant permanent (14) qui agit de telle façon sur au moins une de la première armature d'aimant (11) et de la deuxième armature d'aimant (12) qu'une force magnétique causée par l'aimant permanent (14) agit à l'encontre de la force du deuxième dispositif de précontrainte (10).

2. Vanne à tiroir-piston selon la revendication 1, cependant que l'aimant permanent (14) est agencé de telle façon que la force magnétique causée par l'aimant permanent (14) fait mouvoir l'une vers l'autre la première armature d'aimant (11) et la deuxième armature d'aimant (12).

3. Vanne à tiroir-piston selon la revendication 1 ou 2, cependant que l'aimant permanent (14) est agencé de telle façon qu'il exerce une force d'attraction entre la première armature d'aimant (11) et la deuxième armature d'aimant (12).

4. Vanne à tiroir-piston selon une des revendications de 1 à 3, cependant que l'aimant permanent (14) est agencé entre la première armature d'aimant (11) et la deuxième armature d'aimant (12).

5. Vanne à tiroir-piston selon une des revendications de 1 à 4, cependant que l'aimant permanent (14) est agencé, en particulier encastré ou inséré, dans au moins une de la première armature d'aimant (11) et de la deuxième armature d'aimant (12), de préférence dans la première armature d'aimant (11).

6. Vanne à tiroir-piston selon la revendication 5, cependant que l'aimant permanent (14) est agencé dans au moins une de la première armature d'aimant (11) et de la deuxième armature d'aimant (12) à proximité d'une surface tournée vers l'autre de la première et de la deuxième armature d'aimant (11, 12) correspondante.

7. Vanne à tiroir-piston selon une des revendications de 1 à 6, cependant que l'aimant permanent (14) est aimanté dans le sens axial.

8. Vanne à tiroir-piston selon une des revendications de 1 à 7, cependant que la force magnétique causée par l'aimant permanent (14) est plus faible que la force du deuxième dispositif de précontrainte (10).

9. Vanne à tiroir-piston selon une des revendications de 1 à 8, cependant que l'aimant permanent (14) est un aimant annulaire.

10. Amortisseur destiné à un véhicule, comprenant une vanne à tiroir-piston (1") selon une des revendications de 1 à 9.
